(19) Europäisches Patentamt
European Patent Office
Office européen des brevets

(11) EP 0 652 246 B1

(12) EUROPÄISCHE PATENTSCHRIFT

(45) Veröffentlichungstag und Bekanntmachung des Hinweises auf die Patenterteilung:
**20.08.1997 Patentblatt 1997/34**

(51) Int Cl.[6]: **C08G 77/12**, C08G 77/08

(21) Anmeldenummer: **94117342.9**

(22) Anmeldetag: **03.11.1994**

# (54) Basenkatalysiertes Verfahren zur Herstellung von wasserstoffhaltigen Organopolysiloxanen

Base-catalysed preparation of an hydrogen containing polyorganosiloxane

Procédé de préparation d'un hydropolysiloxane catalysé par une base

(84) Benannte Vertragsstaaten:
**AT BE CH DE ES FR GB IT LI NL**

(30) Priorität: **04.11.1993 DE 4337695**

(43) Veröffentlichungstag der Anmeldung:
**10.05.1995 Patentblatt 1995/19**

(73) Patentinhaber: **Wacker-Chemie GmbH
81737 München (DE)**

(72) Erfinder:
- **Dauth, Jochen, Dr.
D-84489 Burghausen (DE)**
- **Gratzl, Petra
D-84547 Emmerting (DE)**
- **Deubzer, Bernward, Dr.
D-84489 Burghausen (DE)**

(56) Entgegenhaltungen:
**BE-A- 538 417**
**US-A- 2 628 213**
**US-A- 2 637 718**
**US-A- 3 444 225**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 652 246 B1

**Beschreibung**

Die Erfindung betrifft ein Verfahren zur Herstellung von Si-gebundenen Wasserstoff enthaltenden Organopolysiloxanen mit einem basischen Katalysator.

Die Herstellung von Si-gebundenen Wasserstoff enthaltenden Organopolysiloxanen über Hydrolyse und Kondensation von wasserstoffhaltigen Organosilanen oder deren Hydrolysaten wurde bisher mit sauren Katalysatoren durchgeführt, da man davon ausging, daß unter Einfluß von basischen Katalysatoren SiH-gebundener Wasserstoff zu Wasserstoffgas umgesetzt würde.

Beispielsweise in EP-A-251 435 A1 wird ein Verfahren zur Herstellung von wasserstoffhaltigen Organopolysiloxanharzen mit tetrafunktionellen Siloxaneinheiten aus Alkylsilikat und Organosilanen oder oligomerer Organosiloxanverbindung in Gegenwart von Wasser und sauren Katalysatoren beschrieben. Die Harze weisen jedoch eine breite Molekulargewichtsverteilung auf.

Ein Verfahren zur basenkatalysierten Herstellung von nicht wasserstoffhaltigen Polysiloxanen ist beispielsweise bekannt aus EP-A-004 2208.

Es bestand die Aufgabe, ein Verfahren bereitzustellen, mit dem Organopolysiloxanöle, -elastomere und -harze mit Hydrogensilylgruppen auf einfache Weise und reproduzierbar mit einer engen Molekulargewichtsverteilung hergestellt werden können.

Die Erfindung betrifft ein Verfahren zur Herstellung von Si-gebundenen Wasserstoff enthaltenden Organopolysiloxanen, bei dem eine Mischung aus den Komponenten

A) Organosiliciumverbindungen, die ausgewählt werden aus

A1) Organosilanen der allgemeinen Formel

$$R_aH_bSi(OR^1)_{(4-a-b)}, \qquad (1)$$

wobei

- **R** gleiche oder verschiedene, gegebenenfalls substituierte $C_1$- bis $C_{18}$-Kohlenwasserstoffreste,
- **R¹** gleiche oder verschiedene, gegebenenfalls substituierte $C_1$- bis $C_{18}$-Kohlenwasserstoffreste oder Wasserstoffatome,
- **a** die Werte 0, 1, 2 oder 3 und
- **b** die Werte 0, 1, 2 oder 3 bedeuten, und

A2) Organosiloxanen aus Einheiten der allgemeinen Formel

$$R_cH_d(OR^1)_eSiO_{(4-c-d-e)/2}, \qquad (2)$$

wobei

- **c und e** jeweils die Werte 0, 1, 2 oder 3,
- **d** die Werte 0, 1, 2 oder 3 und,

**R** und **R¹** die vorstehend angegebenen Bedeutungen haben, mit der Maßgabe, daß Komponente A mindestens 0,01 - 4 Mol-% Alkoxygruppen pro Mol Siliciumatome aufweist und daß mindestens ein Teil der Organosiliciumverbindungen der Komponente A Si-gebundenen Wasserstoff enthält,

B) mindestens 0,5 Mol Wasser pro Mol Alkoxygruppen in Komponente A, gegebenenfalls

C) mit Wasser mischbarem Lösungsmittel, in Gegenwart von

D) Ammoniak oder primäres oder sekundäres $C_1$-$C_4$-Alkylamin oder einer Verbindung, welche mit Wasser Ammoniak oder primäres oder sekundäres $C_1$-$C_4$-Alkylamin freisetzt,

umgesetzt wird.

Die durch das erfindungsgemäße Verfahren hergestellten Si-gebundenen Wasserstoff enthaltenden Organopolysiloxane weisen ein einheitlicheres Molekulargewicht auf, als mit Hilfe von sauren Katalysatoren hergestellte Si-gebundener Wasserstoff enthaltende Organopolysiloxane.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest **R** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenylrest; Acyloxyalkylreste, wie der 3-Acryloxypropyl- und 3-Methacryloxypropylrest;Acetoxyalkylreste, wie der 3-Acryloxypropyl-Diethylphosphonsäureesterreste, wie der Diethylphosphonsäureesterethylrest; Bernsteinsäureanhydridalkylreste, wie der 3-Bernsteinsäureanhydridpropylrest; Hydroxyalkylreste wie der 3-Hydroxypropylrest und Reste der Formeln

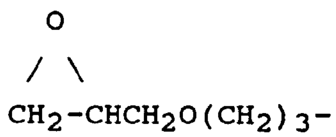

und

$$HOCH_2CH(OH)CH_2SCH_2CH_2-.$$

Bei dem Rest **R** handelt es sich besonders bevorzugt um den Methyl-, Ethyl-, n-Propyl-, Vinyl-, n-5-Hexenyl- und Phenylrest, insbesondere um den Methyl- und den Vinylrest.

Beispiele für Rest $\mathbf{R^1}$ sind die für **R** angegebenen Beispiele. Bei dem Rest $\mathbf{R^1}$ handelt es sich bevorzugt um Alkylgruppen mit 1 bis 6 Kohlenstoffatom, welche mit vorzugsweise $C_1$-$C_6$-Alkyloxygruppen oder Hydroxygruppen substituiert sein können.

Bei dem Rest $\mathbf{R^1}$ handelt es sich besonders bevorzugt um den Methyl-, Ethyl-, n-Propyl, iso-Propyl- und Hexylrest, insbesondere um den Methyl- und Ethylrest.

Beispiele für die im erfindungsgemäßen Verfahren eingesetzten Silane A1 der allgemeinen Formel (1) sind Tetramethoxysilan, Tetraethoxysilan, Tetra-n-propoxysilan, Methyltrimethoxysilan, Vinyltrimethoxysilan, Phenyltrimethoxysilan, Vinyltriethoxysilan, Dimethyldiethoxysilan, Dimethyldimethoxysilan, Trimethylethoxysilan, 3-Chlorpropyldimethylmethoxysilan, 3-Chlorpropyltrimethoxysilan, 3-Acetoxypropyldimethylmethoxysilan, 3-Mercaptopropyldimethylmethoxysilan, n-Octyldimethylmethoxysilan, 3-Methacryloxypropyldimethylmethoxysilan, 2-Cyclohexenylethyldimethylmethoxysilan, 3-Aminopropyldimethylmethoxysilan und 3-Cyanopropylmethyldimethoxysilan, wobei Tetraethoxysilan, Methyltriethoxysilan, Dimethyldiethoxysilan, Trimethylethoxysilan und Vinyldimethylethoxysilan bevorzugt und Tetraethoxysilan, Methyltriethoxysilan und Dimethyldiethoxysilan besonders bevorzugt eingesetzt werden.

Beispiele für die im erfindungsgemäßen Verfahren eingesetzten wasserstoffhaltigen Silane der allgemeinen Formel (1) sind Trihydrogenethoxysilan, Dihydrogenmethylethoxysilan, Hydrogendimethylethoxysilan, Hydrogenmethyldiethoxysilan und Hydrogenphenyldiethoxysilan.

Die im erfindungsgemäßen Verfahren eingesetzten Organosiloxane A2 weisen vorzugsweise höchstens 15 Einheiten der allgemeinen Formel (2) auf. Beispiele für Organosiloxane A2 sind lineare Organosiloxane, wie Disiloxane, beispielsweise Hexamethyldisiloxan, 1,3-Diphenyltetramethyldisiloxan, 1,3-Bis(n-5-hexenyl)tetramethyldisiloxan, 1,3-Divinyltetramethyldisiloxan, vorzugsweise Hexamethyldisiloxan und 1,3-Divinyltetramethyldisiloxan und cyclische Organopolysiloxane aus 3 bis 8, vorzugsweise 4 oder 5 Einheiten der allgemeinen Formel (2), wie Hexamethylcyclotrisiloxan, Octamethylcyclotetrasiloxan und Dekamethylcyclopentasiloxan.

Beispiele für die im erfindungsgemäßen Verfahren eingesetzten wasserstoffhaltigen Organosiloxane A2 sind Dihydrogentetramethyldisiloxan, Tetrahydrogendimethyldisiloxan, Dihydrogentetraphenyldisiloxan, Trihydrogentrimethylcyclotrisiloxan, Tetrahydrogentetramethylcyclotetrasiloxan und Pentahydrogenpentamethylcyclopentasiloxan.

Die Komponente A kann auch monomere und polymere Silikate enthalten. Dies ist insbesondere für die Herstellung von Harzen der Fall. Bevorzugte Silikate sind Methylorthosilikat, Ethylorthosilikat, Methylpolysilikat und Ethylpolysilikat, wobei die Silikate Alkoxyreste enthalten.

Der Wasserstoffgehalt der wasserstoffhaltigen Organopolysiloxanendprodukte beträgt vorzugsweise 0,0001 - 2 Gew.-%, insbesondere 0,01 - 0,6 Gew.-%.

Der Gehalt an Alkoxygruppen der Komponente A beträgt vorzugsweise 0,5 - 2 Mol, insbesondere 0,65 - 1,5 Mol, pro Mol Siliciumatome.

Als Komponente B werden vorzugsweise mindestens 0,5 Mol, insbesondere 0,5 bis 0,8 Mol Wasser pro Mol Alkoxygruppen der Komponente A eingesetzt. Ein hoher Anteil Wasser pro Mol Alkoxygruppen der Komponente A bewirkt eine Zunahme der Gelanteile.

Als Komponente C werden vorzugsweise organische Lösungsmittel eingesetzt, die sich bei 20°C mit Wasser im Volumenverhältnis 1 : 1 homogen vermischen. Beispiele für als Komponente C geeignete Lösungsmittel sind einwertige und mehrwertige Alkohole, wie Methanol, Ethanol, n-Propanol, iso-Propanol und Ethylenglykol; Ether, wie Dioxan und Tetrahydrofuran; Amide, wie Dimethylformamid; Dimethylsulfoxid und Sulfolan oder Gemische dieser Lösungsmittel.

Besonders bevorzugt sind Lösungsmittel mit einem Siedepunkt bzw. Siedebereich von bis zu 120° C bei 0,1 MPa, insbesondere die vorstehenden einwertigen Alkohole.

Vorzugsweise wird Komponente C in einer solchen Menge zugesetzt, daß je nach System der Gelanteil gleich O ist, vorzugsweise 20 bis 300 Gew.-%, insbesondere 50 bis 100 Gew.-%, bezogen auf den Silananteil in Komponente A.

Als Verbindungen der Komponente D, welche mit Wasser Ammoniak oder primäres oder sekundäres $C_1$-$C_4$-Alkylamin freisetzen, werden die Verbindungen der allgemeinen Formeln (3) bis (7)

$$R^2_nSiZ_{4-n}, \quad (3)$$

$$(R^2_3Si)_2NH, \quad (4)$$

$$(R^2_2SiNH)_x, \quad (5)$$

$$(R^2_3Si)_2NR^3 \quad (6)$$

und

$$(R^2_2SiNR^3)_y, \quad (7)$$

wobei

- **$R^2$** ein Wasserstoffatom oder einen $C_1$- bis $C_4$-Alkylrest,
- **$R^3$** einen $C_1$- bis $C_4$-Alkylrest,
- **Z** die Gruppe $-NHR^3$ oder $NR^3_2$,
- **n** die Werte 2 oder 3,
- **x** ganze Zahlen von 3 bis 6 und
- **y** ganze Zahlen von 1 bis 12

bedeuten, bevorzugt eingesetzt.

Besonders bevorzugt ist der Einsatz von Verbindungen der allgemeinen Formel (4), insbesondere von Hexamethyldisilazan.

Ammoniak oder primäres oder sekundäres $C_1$-$C_4$-Alkylamin wirken im erfindungsgemäßen Verfahren als Katalysator und werden vorzugsweise nach der Umsetzung, insbesondere durch Behandlung unter vermindertem Druck entfernt.

Vorzugsweise werden im erfindungsgemäßen Verfahren 0,005 - 0,5, insbesondere 0,05 - 0,3 Mol Ammoniak oder primäres oder sekundäres $C_1$-$C_4$-Alkylamin oder Verbindungen, welche mit Wasser die vorstehenden Mengen Ammoniak oder primäres $C_1$-$C_4$-Alkylamin freisetzen, pro 1 Mol der Komponente A eingesetzt.

Durch das erfindungsgemäße Verfahren können beispielsweise wasserstoffhaltige Organopolysiloxanöle, -elastomere und -harze durch Wahl der eingesetzten Komponenten A und D hergestellt werden. Silane der vorstehenden allgemeinen Formel (1), bei denen (4-a-b) = w und Siloxane der vorstehenden allgemeinen Formel (2), bei denen(4-c-d) = w , werden als M-, D-, T- bzw. Q-Einheiten bezeichnet, wenn w = 1, 2, 3 bzw. 4. Die Anzahl der im Verfahren eingesetzten M-, D-, T- bzw. Q-Einheiten kann jeweils von 0 bis zu 100 Mol.% variieren. Das erfindungsgemäße Verfahren eignet sich besonders für die Herstellung von wasserstoffhaltigen Siliconharzen, insbesondere von MQ-Harzen, bei denen das M/Q-Verhältnis vorzugsweise 0,3 : 1 bis 2 : 1, insbesondere 0,5 : 1 bis 1,25 : 1 beträgt. Es können beispielsweise transparente, in organischen Lösungsmitteln lösliche, monomodal verteilte MQ-Harze hergestellt werden, deren Molekulargewichte von 4 000 g/mol bis 25 000 g/mol einstellbar sind. Derartige MQ-Harze weisen bei der Herstellung einen Gelanteil von weniger als 2 Gew.-%, bezogen auf die theoretische Ausbeute auf.

Das erfindungsgemäße Verfahren wird vorzugsweise bei 0°C bis 100°C, insbesondere bei 25°C bis 75°C durchgeführt. Vorzugsweise werden nach der Umsetzung alle flüchtigen Anteile wie Wasser und Lösungsmittel, wie Ethanol, vorzugsweise unter vermindertem Druck entfernt.

Vorzugsweise werden bei dem erfindungsgemäßen Verfahren die Komponenten A, und D vorgelegt und B und C zudosiert.

Im Anschluß an die Umsetzung der Komponenten A bis D können die erhaltenen wasserstoffhaltigen Organopolysiloxane, insbesondere die Harze, zur Senkung des Gehalts an $-OR^1$ Gruppen, insbesondere des Alkoxygruppengehalts, sauer oder basisch nachkondensiert werden. Wenn dabei wasserfrei gearbeitet wird, kann auch mit starken Basen, wie Alkali- und Erdalkalihydroxiden als Kondensationskatalysatoren in organischen Lösungsmitteln, wie Kohlenwasserstoffen, der Wasserstoffgehalt beinahe unverändert beibehalten werden.

Die Nachkondensation zur Senkung des Gehalts an Alkoxygruppen ist auch bei wasserstoffhaltigen Organopolysiloxanen möglich, die auf andere Weise und nicht nach dem erfindungsgemäßen Verfahren hergestellt worden sind.

Die nach dem erfindungsgemäßen Verfahren hergestellten wasserstoffhaltigen Organopolysiloxane können für alle Zwecke verwendet werden, für die wasserstoffhaltige Organopolysiloxane eingesetzt werden können. Beispielsweise eignen sich die MQ-Harze als Füllstoff, als Vernetzer in additionsvernetzenden Systemen und als Haftvermittler.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 25° C .

Die nachstehenden Abkürzungen wurden verwendet:

p.A. = zur Analyse
dest. = destilliert

Beispiele

**Beispiel 1**

In die unter Schutzgas auf 40°C erwärmte Vorlage bestehend aus 125,4 g Tetraethoxysilan (0,6 mol), 9,72 g Hexamethyldisilazan (0,06 mol) und 62,53 g Hydrogendimethylethoxysilan (0,6 mol) wurden 21,60 g Wasser dest. (1,2 mol) und 60,00 g Ethanol p.A. (1,3 mol) - vorab im Zulaufgefäß gemischt - getropft.

Das Reaktionsgemisch wurde 2,5 Stunden bei Raumtemperatur und Normaldruck gerührt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 44,48 g (55,9 % Ausbeute) eines viskosen, transparenten Öles mit 0,53 Gew.-% Si-gebundenem Wasserstoff.

**Beispiel 2**

In die unter Schutzgas auf 40°C erwärmte Vorlage bestehend aus 20,90 g Tetraethoxysilan (0,1 mol), 1,62 g Hexamethyldisilazan (0,01 mol) und 6,72 g 1,1,3,3-Tetramethyldisiloxan (0,05 mol) wurden 3,60 g Wasser dest. (0,2 mol) und 12,00 g Ethanol p.A. (0,26 mol) - vorab im Zulaufgefäß gemischt - getropft.

Das Reaktionsgemisch wurde 3 Stunden bei Raumtemperatur und Normaldruck gerührt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 7,90 g (55,48 % Ausbeute) eines hochviskosen, transparenten Öles mit 0,56 Gew.-% Si-gebundenem Wasserstoff.

**Beispiel 3**

In die unter Schutzgas auf 40°C erwärmte Vorlage bestehend aus 20,90 g Tetraethoxysilan (0,1 mol), 2,66 g Hexamethyldisilazan (0,0165 mol), 3,06 g 1,3-Divinyltetramethyldisilazan (0,0165 mol) und 3,44 g Hydrogendimethylethoxysilan (0,033 mol) wurden 3,60 g Wasser dest. (0,2 mol) und 10,00 g Ethanol p.A. (0,22 mol) - vorab im Zulaufgefäß gemischt - getropft.

Das Reaktionsgemisch wurde 2,5 Stunden bei 60°C, eine Stunde bei Raumtemperatur und Normaldruck gerührt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 11,13 g (84,9 % Ausbeute) eines hochviskosen, transparenten Öles mit 0,11 Gew.-% Si-gebundenem Wasserstoff und 5,34 Gew.-% Vinylgruppen.

**Beispiel 4**

In die unter Schutzgas auf 40°C erwärmte Vorlage bestehend aus 20,90 g Tetraethoxysilan (0,1 mol), 2,70 g Hexamethyldisilazan (0,0167 mol), 5,55 g 3-Chlorpropyldimethylmethoxysilan (0,033 mol) und 2,24 g 1,1,3,3-Tetramethyldisiloxan (0,0167 mol) wurden 3,60 g Wasser dest. (0,2 mol) und 12,0 g Ethanol p.A.(0,26 mol) - vorab im Zulaufgefäß gemisch - getropft.

Das Reaktionsgemisch wurde 24 Stunden bei Raumtemperatur und Normaldruck gerührt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 9,53 g (62,5 % Ausbeute) eines niederviskosen, transparenten Öles mit 2,84 Gew.-% Chlorpropylgruppen und 0,038 Gew.-% Si-gebundenem Wasserstoff.

**Beispiel 5**

In die unter Schutzgas auf 40°C erwärmte Vorlage bestehend aus 10,45 g Tetraethoxysilan (0,05 mol), 1,35 g Hexamethyldisilazan (0,00835 mol), 3,41 g 3-Acetoxypropyldimethylmethoxysilan (0,0167 mol) und 1,12 g 1,1,3,3-Tetramethyldisiloxan (0,00835 mol) wurden 1,80 g Wasser dest. (0,1 mol) und 6,0 g Ethanol p.A.(0,13 mol) - vorab im Zulaufgefäß gemischt - getropft.

Das Reaktionsgemisch wurde 24 Stunden bei Raumtemperatur und Normaldruck gerührt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 3,03 g (36,7 % Ausbeute) eines niederviskosen, transparenten Öles mit 2,36 Gew.-% Acetoxypropylgruppen und 0,039 Gew.-% Si-gebundenem Wasserstoff.

**Beispiel 6**

In die unter Schutzgas auf 40°C erwärmte Vorlage bestehend aus 10,45 g Tetraethoxysilan (0,05mol), 1,35 g Hexamethyldisilazan (0,00835mol), 2,75 g 3-Mercaptopropyldimethylmethoxysilan (0,0167mol) und 1,12 g 1,1,3,3-Tetramethyldisiloxan (0,00835mol) wurden 1,80 g Wasser, dest. (0,1mol) und 6,0 g Ethanol p.A. (0,13mol) - vorab im Zulaufgefäß gemischt - getropft.

Das Reaktionsgemisch wurde 3,5 Stunden bei 75°C und Normaldruck gerührt und dann auf Raumtemperatur abgekühlt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 6,9 g (90,8 % Ausbeute) eines transparenten Öles mit 2,55 Gew.-% Mercaptopropylgruppen und 0,041 Gew.-% Si-gebundenem Wasserstoff.

**Beispiel 7**

In die unter Schutzgas auf 40°C erwärmte Vorlage bestehend aus 10,45 g Tetraethoxysilan (0,05 mol), 1,35 g Hexamethyldisilazan (0,00835 mol), 4,48 g 2-(Ethoxydimethylsilyl)ethylphosphonsäurediethylester (0,0167 mol) und 1,12 g 1,1,3,3-Tetramethyldisiloxan (0,00835 mol) wurden 1,80 g Wasser dest. (0,1 mol) und 6,0 g Ethanol p.A.(0,13 mol)-vorab im Zulaufgefäß gemischt - getropft.

Das Reaktionsgemisch wurde 3,5 Stunden bei 75°C, Normaldruck gerührt und dann auf Raumtemperatur abgekühlt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 6,90 g (76 % Ausbeute) eines niederviskosen, transparenten Öles mit 2,99 Gew.-% Ethanphosphonsäurediethylestergruppen und 0,041 Gew.-% Si-gebundenem Wasserstoff.

**Beispiel 8**

In die unter Schutzgas auf 40°C erwärmte Vorlage bestehend aus 10,45 g Tetraethoxysilan (0,05mol), 1,35 g Hexamethyldisilazan (0,00835 mol), 3,38 g n-Octyldimethylmethoxysilan (0,0167 mol) und 1,12 g 1,1,3,3-Tetramethyldisiloxan (0,00835 mol) wurden 1,80 g Wasser dest. (0,1 mol) und 6,0 g Ethanol p.A. (0,13 mol) - vorab im Zulaufgefäß gemischt-getropft.

Das Reaktionsgemisch wurde 3,5 Stunden bei 75°C, Normaldruck gerührt und dann auf Raumtemperatur abgekühlt. Der Ansatz wurde anschließend auf pH 7 eingestellt, durch eine Filtration von gegebenenfalls auftretenden Gelanteilen befreit und danach im Hochvakuum bei 100°C bis zur Gewichtskonstanz eingeengt.

Man erhielt 5,51 g (67 % Ausbeute) eines viskosen, transparenten Öles mit 2,32 Gew.-% n-Octylgruppen und 0,043 Gew.-% Si-gebundenem Wasserstoff.

**Beispiel 9**

In die unter Schutzgas auf 40°C erwärmte Vorlage bestehend aus 10,45 g Tetraethoxysilan (0,05 mol), 1,35 g Hexamethyldisilazan (0,00835 mol), 3,61 g 3-(Methacryloxy)propyldimethylmethoxysilan (0,0167 mol) und 1,12 g 1,1,3,3-Tetramethyldisiloxan (0,00835 mol) wurden 1,80 g Wasser dest. (0,1 mol) und 6,0 g Ethanol p.A. (0,13 mol) - vorab im Zulaufgefäß gemischt - getropft.

Das Reaktionsgemisch wurde 5 Stunden bei 60°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und danach im Hochvakuum bei 100°C bis zur Gewichtskonstanz eingeengt.

Man erhielt 7,52 g (88,9 % Ausbeute) eines transparenten Öles mit 3,56 Gew.-% 3-(Methacryloxy)propylgruppen und 0,037 Gew.-% Si-gebundenem Wasserstoff.

**Beispiel 10**

In die unter Schutzgas auf 40°C erwärmte Vorlage bestehend aus 10,45 g Tetraethoxysilan (0,05 mol), 1,35 g Hexamethyldisilazan (0,00835 mol), 3,31 g 2-Cyclohexenylethyldimethylmethoxysilan (0,0167 mol) und 1,12 g 1,1,3,3-Tetramethyldisiloxan (0,00835 mol) wurden 1,80 g Wasser dest. (0,1 mol) und 7,0 g Ethanol p.A. (0,15 mol) - vorab im Zulaufgefäß gemischt - getropft.

Das Reaktionsgemisch wurde 5 Stunden bei 75°C, Normaldruck gerührt und danach auf Raumtemperatur abgekühlt. Der Ansatz wurde auf pH 7 eingestellt, anschließend durch eine Filtration von gegebenenfalls auftretenden Gelanteilen befreit und danach im Hochvakuum bei 100°C bis zur Gewichtskonstanz eingeengt.

Man erhielt 3,56 g (43,7 % Ausbeute) eines gelben, transparenten Öles mit 3,1 Gew.-% 2-Cyclohexenylgruppen und 0,03 Gew.-% Si-gebundenem Wasserstoff.

**Beispiel 11**

In die unter Schutzgas auf 40°C erwärmte Vorlage bestehend aus 10,45 g Tetraethoxysilan (0,05 mol), 1,35 g Hexamethyldisilazan (0,00835 mol), 3,48 g 2-Phenylpropyldimethylmethoxysilan (0,0167 mol) und 1,12 g 1,1,3,3-Tetramethyldisiloxan (0,00835 mol) wurden 1,80 g Wasser dest. (0,1 mol) und 7,0 g Ethanol p. A. (0,15 mol) - vorab im Zulaufgefäß gemischt - getropft.

Das Reaktionsgemisch wurde 5 Stunden bei 75°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 5,24 g (63,06 % Ausbeute) eines viskosen, transparenten Öles mit 2,22 Gew.-% 2-Phenylpropylgruppen und 0,039 Gew.-% Si-gebundenem Wasserstoff.

**Beispiel 12**

In die unter Schutzgas auf 40°C erwärmte Vorlage bestehend aus 10,45 g Tetraethoxysilan (0,05 mol), 1,35 g Hexamethyldisilazan (0,00835 mol), 3,11 g 3,3,3-Trifluorpropyldimethylmethoxysilan (0,0167 mol) und 1,12 g 1,1,3,3-Tetramethyldisiloxan (0,00835 mol) wurden 1,80 g Wasser dest. (0,1 mol) und 7,0 g Ethanol p.A. (0,15 mol) - vorab im Zulaufgefäß gemischt - getropft.

Das Reaktionsgemisch wurde 3,5 Stunden bei 75°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 6,88 g (86,5 % Ausbeute) eines viskosen, transparenten Öles mit 2,86 Gew.-% 3,3,3-Trifluorpropylgruppen und 0,035 Gew.-% Si-gebundenem Wasserstoff.

**Beispiel 13**

In die Vorlage bestehend aus 1,80 g Wasser dest. (0,1 mol), 6,0 g Ethanol p.A. (0,13 mol) und 2,46 g 3-Aminopropyldimethylmethoxysilan (0,0167 mol) wurden 0,0167 mol Chlorwasserstoff in Form einer konzentrierten wäßrigen Salzsäure gegeben und mittels pH-Meter auf pH 7,0 eingestellt. Die neutralisierte Vorlage wurde auf 40°C erwärmt und 10,45 g Tetraethoxysilan (0,05 mol), 1,35 g Hexamethyldisilazan (0,00835 mol) sowie 1,12 g 1,1,3,3- Tetramethyldisiloxan (0,00835 mol) zugetropft.

Das Reaktionsgemisch wurde 3,5 Stunden bei 75°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 6,78 g (85,7 % Ausbeute) eines gelbes Festharzes mit 2,5 Gew.-% 3-Aminopropylhydrochloridgruppen und 0,029 Gew.-% Si-gebundenem Wasserstoff.

**Beispiel 14**

In die unter Schutzgas auf 40°C erwärmte Vorlage bestehend aus 62,70 g Tetraethoxysilan (0,3 mol), 8,1 g Hexamethyldisilazan (0,05 mol), 27,49 g 3-Methyldiethoxysilylpropylbernsteinsäureanhydrid (0,1 mol) und 6,72 g 1,1,3,3-Tetramethyldisiloxan (0,05 mol) wurden 10,80 g Wasser dest. (0,6 mol) und 36,0 g Ethanol p.A. (0,78 mol) - vorab im Zulaufgefäß gemischt - getropft.

Das Reaktionsgemisch wurde 24 Stunden bei Raumtemperatur und Normaldruck gerührt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 44,72 g (88,6 % Ausbeute) eines gelben Festharzes mit 3,2 Gew.-% Propylbernsteinsäureanhydridgruppen und 0,02 Gew.-% Si-gebundenem Wasserstoff.

Das Harz wurde in einer Mischung aus 50 ml Ethanol p.A., 150 ml Wasser dest. und 2,0 g Kaliumhydroxid (0,036 mol) gelöst. Mittels pH-Meter und unter Zugabe von weiteren 1,0 g Kaliumhydroxid (0,018 mol) wurde ein pH-Wert von 6,98 eingestellt. Die Lösung wurde filtriert und dann im Hochvakuum bei 100°C bis zur Gewichtskonstanz eingeengt. Das Produkt wurde anschließend über Diphosphorpentoxid im Hochvakuum bei 80°C getrocknet.

**Beispiel 15**

In die unter Schutzgas auf 40°C erwärmte Vorlage bestehend aus 20,9 g Tetraethoxysilan (0,1 mol), 2,70 g Hexamethyldisilazan (0,0167 mol), 5,77 g Cyanopropylmethyldimethoxysilan (0,0333 mol) und 2,24 g 1,1,3,3-Tetramethyldisiloxan (0,0167 mol) wurden 3,60 g Wasser dest. (0,2 mol) und 12,0 g Ethanol p.A. (0,26 mol) - vorab im Zulaufgefäß gemischt - getropft.

Das Reaktionsgemisch wurde 3 Stunden bei 75°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 8,91 g (61,8 % Ausbeute) eines niederviskosen, transparenten Öles mit 4,24 Gew.-% Cyanopropylgruppen und 0,044 Gew.-% Si-gebundenem Wasserstoff.

**Beispiel 16**

In die unter Schutzgas auf 40°C erwärmte Vorlage bestehend aus 10,45 g Tetraethoxysilan (0,05mol), 1,35 g Hexamethyldisilazan (0,00835mol), 4,21 g 2,2-Diethoxy-2,3,4,5-tetrahydro-1,2-benzoxasilepin (0,0167 mol) und 1,12 g 1,1,3,3-Tetramethyldisiloxan(0,00835 mol) wurden 1,80 g Wasser dest. (0,1 mol) und 6,0 g Ethanol p.A. (0,13 mol) - vorab im Zulaufgefäß gemischt - getropft.

Das Reaktionsgemisch wurde 24 Stunden bei Raumtemperatur und Normaldruck gerührt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 8,11 g (74,5 % Ausbeute) eines gelben, hochviskosen, transparenten Öles mit 4,19 Gew.-% ortho-Phenoxypropylgruppen und 0,039 Gew.-% Si-gebundenem Wasserstoff.

**Beispiel 17**

In die unter Schutzgas auf 40°C erwärmte Vorlage bestehend aus 20,9 g Tetraethoxysilan (0,1mol), 2,70 g Hexamethyldisilazan (0,0167 mol), 6,71 g Dimethyldiethoxysilan (0,05 mol) und 7,42 g Methyldiethoxysilan (0,05 mol) wurden 3,60 g Wasser dest. (0,2 mol) und 12,0 g Ethanol p.A. (0,26 mol) - vorab im Zulaufgefäß gemischt - getropft.

Das Reaktionsgemisch wurde 5 Stunden bei 60°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 11,58 g (86,3 % Ausbeute) eines niederviskosen, transparenten Öles mit 0,04 Gew.-% Si-Wasserstoffgruppen.

**Beispiel 18**

In die unter Schutzgas auf 40°C erwärmte Vorlage bestehend aus 17,84 g Methyltriethoxysilan (0,1 mol), 4,035 g Hexamethyldisilazan (0,025 mol) und 5,21 g Hydrogendimethylethoxysilan (0,05 mol) wurden 3,60 g Wasser dest. (0,2 mol) und 10,00 g Ethanol p.A. (0,22 mol) - vorab im Zulaufgefäß gemischt - getropft.

Das Reaktionsgemisch wurde 24 Stunden bei Raumtemperatur und Normaldruck gerührt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 8,03 g (56,8 % Ausbeute) eines transparenten Öles mit 0,089 Gew.-% Si-gebundenem Wasserstoff.

**Beispiel 19**

Als Vorlage wurden 18,48 g des wasserstoffhaltigen Organopolysiloxanharzes (17,5 Gew.-% Ethoxygehalt) aus Beispiel 1 in 200 ml Toluol gelöst; 500 ppm Kaliumhydroxid (25 % in Methanol p.A.) in die Vorlage eingebracht, 3,5 Stunden bei 80°C, Normaldruck gerührt und dann auf Raumtemperatur abgekühlt. Der Ansatz wurde auf pH 7 eingestellt, anschließend durch eine Filtration von gegebenenfalls auftretenden Gelanteilen befreit und dann im Hochvakuum bei 100°C bis zur Gewichtskonstanz eingeengt.

Man erhielt 16,91 g (91,5 % Ausbeute) des Ausgangsharzes mit 13,99 Gew.-% Ethoxygehalt. Der Gehalt an Si-gebundenem Wasserstoff hat sich nicht verändert.

**Beispiel 20**

Als Vorlage wurden 4,0 g des wasserstoffhaltigen Organopolysiloxanharzes (17,5 Gew.-% Ethoxygehalt) aus Beispiel 1 in 40 ml Toluol gelöst; 500 ppm wäßrige, konzentrierte Salzsäure wurden in diese Vorlage eingebracht, 2,5 Stunden bei 80°C gerührt und dann auf Raumtemperatur abgekühlt. Unter Zugabe von Magnesiumoxid wurde der Ansatz neutralisiert, anschließend durch eine Filtration von gegebenenfalls auftretenden Gelanteilen befreit und dann im Hochvakuum bei 100°C bis zur Gewichtskonstanz eingeengt.

Man erhielt 3,14 g (78,5 % Ausbeute) des Ausgangsharzes mit 14,45 Gew.-% Ethoxygehalt. Der Gehalt an Si-gebundenem Wasserstoff hat sich nicht verändert.

**Beispiel 21**

In die unter Schutzgas auf 40°C erwärmte Vorlage aus 10,45 g Tetraethoxysilan (0,05 mol), 5,91 g Trimethylethoxysilan (0,033 mol), und 1,80 g Wasser dest. (0,1 mol) und 12,00 g Ethanol p.A. (0,26 mol) als vorab gemischte Lösung, wurden 3,36 g 1,1,3,3-Tetramethyldisiloxan (0,025 mol) getropft.

Bei dieser Temperatur wurde 5 Minuten gerührt und die Lösung anschließend mit gasförmigem Ammoniak gesättigt. Das Reaktionsgemisch wurde weitere 2 Stunden bei Raumtemperatur und Normaldruck gerührt, anschließend durch eine Filtration von gegebenenfalls auftretenden Gelanteilen befreit und dann im Hochvakuum bei 100°C bis zur Gewichtskonstanz eingeengt.

Man erhielt 2,39 g (22,2 % Ausbeute) eines viskosen, transparenten Öles mit 0,1 Gew.-% Si-gebundenem Wasserstoff.

**Beispiel 22**

In die unter Schutzgas auf 40°C erwärmte Vorlage bestehend aus 10,45 g Tetraethoxysilan (0,05 mol), und 1,80 g Wasser dest. (0,1 mol) und 12,00 g Ethanol p.A. (0,26 mol) - vorab gemischt - wurden 6,72 g 1,1,3,3-Tetramethyldisiloxan (0,05 mol) getropft.

Bei dieser Temperatur wurde 5 Minuten gerührt und die Lösung anschließend mit gasförmigen Ammoniak gesättigt. Das Reaktionsgemisch wurde weitere 2 Stunden bei Raumtemperatur und Normaldruck gerührt, anschließend durch eine Filtration von gegebenenfalls auftretenden Gelanteilen befreit und dann im Hochvakuum bei 100°C bis zur Gewichtskonstanz eingeengt.

Man erhielt 3,0 g (30,7 % Ausbeute) eines niederviskosen, transparenten Öles mit 0,4 Gew.-% Si-gebundenem Wasserstoff.

**Beispiel 23**

In die unter Schutzgas auf 40°C erwärmte Vorlage bestehend aus 20,90 g Tetraethoxysilan (0,1 mol), 2,66 g Hexamethyldisilazan (0,0165 mol), 4,30 g 1,3-Divinyltetramethyldisilazan (0,033mol) und 3,44 g Hydrogendimethylethoxysilan (0,033 mol) wurden 3,60 g Wasser dest. (0,2 mol) und 10,00 g Ethanol p.A. (0,22 mol) - vorab im Zulaufgefäß gemischt - getropft.

Das Reaktionsgemisch wurde 2,5 Stunden bei 60°C, eine Stunde bei Raumtemperatur und jeweils Normaldruck gerührt. Der Ansatz wurde anschließend durch eine Filtration von gegebenenfalls auftretenden Gelanteilen befreit und dann im Hochvakuum bei 100°C bis zur Gewichtskonstanz eingeengt.

Man erhielt 9,55 g (67,7 % Ausbeute) eines weißen Festharzes mit 5,56 Gew.-% Vinylgruppen und 0,099 Gew.-% Si-gebundenem Wasserstoff.

1,0 g Festharz wurden anschließend in 9,0 g Toluol gelöst und mit 100 ppm (bezogen auf reines Platin) eines Platinkatalysators, bestehend aus Hexachloroplatinsäure und Divinyltetramethyldisiloxan, versetzt.

Man erhielt 10,0 g eines stabilen, transparenten Gels.

**Beispiel 24**

5,0 g wasserstoffhaltiges Organopolysiloxanharz aus Beispiel 2 wurden mit 5,0 g $\alpha,\omega$-Divinylpolydimethylsiloxan der Viskosität 500 mPa.s vermischt und mit 100 ppm (bezogen auf reines Platin) eines Platinkatalysators, bestehend aus Hexachloroplatinsäure und Divinyltetramethyldisiloxan, versetzt.

Man erhielt 10,0 g eines spröden, transparenten Produkts.

**Beispiel 25**

In die unter Schutzgas auf 40°C erwärmte Vorlage, bestehend aus 41,8 g Tetraethoxysilan (0,2 mol), 3,24 g Hexamethyldisilazan (0,02 mol) und 13,44 g 1,1,3,3-Tetramethyldisiloxan (0,1 mol) wurden 7,20 g Wasser dest. (0,4 mol) getropft.

Das Reaktionsgemisch wurde 3 Stunden bei 75°C, Normaldruck gerührt und dann auf Raumtemperatur abgekühlt. Der Ansatz wurde anschließend im Hochvakuum bei 100°C bis zur Gewichtskonstanz eingeengt.

Man erhielt ein weißes, unlösliches Pulver mit 0,13 Gew.-% Si-gebundenem Wasserstoff.

**Patentansprüche**

**1.** Verfahren zur Herstellung von Si-gebundenen Wasserstoff enthaltenden Organopolysiloxanen, bei dem eine Mischung aus den Komponenten

A) Organosiliciumverbindungen, die ausgewählt werden aus

A1) Organosilanen der allgemeinen Formel

$$R_aH_bSi(OR^1)_{(4-a-b)}, \qquad (1)$$

wobei

**R** gleiche oder verschiedene, gegebenenfalls substituierte $C_1$- bis $C_{18}$-Kohlenwasserstoffreste,
**R¹** gleiche oder verschiedene, gegebenenfalls substituierte $C_1$- bis $C_{18}$-Kohlenwasserstoffreste oder Wasserstoffatome,
**a** die Werte 0, 1, 2 oder 3 und
**b** die Werte 0, 1, 2 oder 3 bedeuten, und

A2) Organosiloxanen aus Einheiten der allgemeinen Formel

$$R_cH_d(OR^1)_eSiO_{(4-c-d-e)/2}, \qquad (2)$$

wobei

**c und e** jeweils die Werte 0, 1, 2 oder 3,
**d** die Werte 0, 1, 2 oder 3 und,
**R** und **R¹** die vorstehend angegebenen Bedeutungen haben, mit der Maßgabe, daß Komponente A mindestens 0,01-4 mol Alkoxygruppen pro mol Siliciumatome aufweist und daß mindestens ein Teil der Organosiliciumverbindungen der Komponente A Si-gebundenen Wasserstoff enthält,

B) mindestens 0,5 Mol Wasser pro Mol Alkoxygruppen in Komponente A, gegebenenfalls
C) mit Wasser mischbarem Lösungsmittel,
in Gegenwart von
D) Ammoniak oder primäres oder sekundäres $C_1$-$C_4$-Alkylamin oder einer Verbindung, welche mit Wasser Ammoniak oder primäres oder sekundäres $C_1$-$C_4$-Alkylamin freisetzt,
umgesetzt wird.

**2.** Verfahren nach Anspruch 1, wobei der Rest **R¹** Alkylgruppen mit 1 bis 6 Kohlenstoffatom bedeutet, welche mit $C_1$-$C_6$-Alkyloxygruppen oder Hydroxygruppen substituiert sein können.

**3.** Verfahren nach Anspruch 1 oder 2, wobei die Komponente A auch Silikate enthält.

**4.** Verfahren nach einem der Ansprüche 1 bis 3, wobei der Wasserstoffgehalt der Organopolysiloxanendprodukte 0,0001 - 2 Gew.-% beträgt.

**5.** Verfahren nach einem der Ansprüche 1 bis 4, wobei als Verbindungen der Komponente D, welche mit Wasser Ammoniak oder primäres oder sekundäres $C_1$-$C_4$-Alkylamin freisetzen, die Verbindungen der allgemeinen Formeln (3) bis (7)

$$R^2_nSiZ_{4-n}, \qquad (3)$$

$$(R^2_3Si)_2NH, \qquad (4)$$

$$(R^2_2SiNH)_x, \qquad (5)$$

$$(R^2_3Si)_2NR^3 \quad (6)$$

und

$$(R^2_2SiNR^3)_y, \quad (7)$$

wobei

$R^2$ ein Wasserstoffatom oder einen $C_1$- bis $C_4$-Alkylrest,
$R^3$ einen $C_1$- bis $C_4$-Alkylrest,
Z die Gruppe $-NHR^3$ oder $NR^3_2$,
**n** die Werte 2 oder 3,
**x** ganze Zahlen von 3 bis 6 und
**y** ganze Zahlen von 1 bis 12
eingesetzt werden.

**6.** Verfahren nach einem der Ansprüche 1 bis 5, wobei im Anschluß an die Umsetzung der Komponenten A bis D die erhaltenen wasserstoffhaltigen Organopolysiloxane, sauer oder basisch nachkondensiert werden.

**7.** Verfahren nach Anpruch 6, wobei wasserfrei gearbeitet wird und als Kondensationskatalysatoren Alkali- oder Erdalkalihydroxide in organischen Lösungsmitteln eingesetzt werden.

## Claims

**1.** Process for preparing organopolysiloxanes containing Si-bonded hydrogen, which comprises reacting a mixture of the components

A) organosilicon compounds selected from among

A1) organosilanes of the general formula

$$R_aH_bSi\,(OR^1)_{(4-a-b)}, \quad (1)$$

where

**R** are identical or different, unsubstituted or substituted $C_1$- to $C_{18}$-hydrocarbon radicals,
**R¹** are identical or different, unsubstituted or substituted $C_1$- to $C_{18}$-hydrocarbon radicals or hydrogen atoms,
**a** is 0, 1, 2 or 3 and
**b** is 0, 1, 2 or 3, and

A2) organosiloxanes comprising units of the general formula

$$R_cH_d(OR^1)_eSiO_{(4-c-d-e)/2}, \quad (2)$$

where

**c and e** are each 0, 1, 2 or 3,
**d** is 0, 1, 2 or 3, and
**R** and **R¹** are as defined above, with the proviso that component A has at least 0.01 - 4 mol of alkoxy groups per mol of silicon atoms and that at least a part of the organosilicon compounds of the component A comprises Si-bonded hydrogen,

B) at least 0.5 mol of water per mol of alkoxy groups in component A, with or without
C) water-miscible solvent,
in the presence of
D) ammonia or primary or secondary $C_1$-$C_4$-alkylamine or a compound which liberates ammonia or primary or secondary $C_1$-$C_4$-alkylamine on reaction with water.

**2.** Process according to Claim 1, wherein the radicals **R¹** are alkyl groups having from 1 to 6 carbon atoms which can be substituted by $C_1$-$C_6$-alkyloxy groups or hydroxy groups.

**3.** Process according to Claim 1 or 2, wherein the component A also comprises silicates.

**4.** Process according to any one of Claims 1 to 3, wherein the hydrogen content of the organopolysiloxane final products is 0.0001 - 2% by weight.

**5.** Process according to any one of Claims 1 to 4, wherein, as compounds of the component D which liberate ammonia or primary or secondary $C_1$-$C_4$-alkylamine by reaction with water, use is made of the compounds of the general formulae (3) to (7)

$$R^2_nSiZ_{4-n}, \quad (3)$$

$$(R^2_3Si)_2NH, \quad (4)$$

$$(R^2_2SiNH)_x, \quad (5)$$

$$(R^2_3Si)_2NR^3 \quad (6)$$

and

$$(R^2_2SiNR^3)_y\ , \qquad (7)$$

where

**$R^2$** is a hydrogen atom or a $C_1$- to $C_4$-alkyl radical,
**$R^3$** is a $C_1$- to $C_4$-alkyl radical,
**Z** is the group $-NHR^3$ or $NR^3_2$,
**n** is 2 or 3,
**x** is an integer from 3 to 6 and
**y** is an integer from 1 to 12.

**6.** Process according to any one of Claims 1 to 5, wherein, subsequent to the reaction of the components A to D, the hydrogen-containing organopolysiloxanes obtained are subjected to further condensation under the action of acid or base.

**7.** Process according to Claim 6, wherein the process is carried out in the absence of water and alkali metal or alkaline earth metal hydroxides in organic solvents are used as condensation catalysts.

**Revendications**

**1.** Procédé de préparation d'organopolysiloxanes contenant un hydrogène lié au silicium, dans lequel on fait réagir un mélange des composants

A) composés organiques du silicium, qui sont choisis parmi

A1) des organosilanes de formule générale

$$R_aH_bSi\ (OR^1)_{(4-a-b)} \qquad (1),$$

où

R représente des radicaux hydrocarbonés en $C_1$ à $C_{18}$, identiques ou différents, éventuellement substitués;
$R^1$ représente des radicaux hydrocarbonés en $C_1$ à $C_{18}$, identiques ou différents, éventuellement substitués, ou des atomes d'hydrogène;
a a la valeur 0, 1, 2 ou 3, et
b a la valeur 0, 1, 2 ou 3;

et
A2) des organosiloxanes formés d'unités de formule générale

$$R_cH_d(OR^1)_eSiO_{(4-c-d-e)/2} \qquad (2),$$

où

c et e ont chacun la valeur 0, 1, 2 ou 3;
d a la valeur 0, 1, 2 ou 3, et
R et $R^1$ ont les significations données ci-dessus, avec la condition que le composant A présente au moins 0,01-4 moles de groupes alcoxy par mole d'atomes de silicium et qu'au moins une partie des composés organiques du silicium du composant A contienne des hydrogènes liés au silicium;

B) au moins 0,5 mole d'eau par mole de groupes alcoxy dans le composant A; le cas échéant,
C) un solvant miscible avec l'eau, en présence
D) d'ammoniaque, ou d'une (alcoyl en $C_{1-4}$) amine primaire ou secondaire, ou d'un composé qui libère, au contact de l'eau, de l'ammoniaque ou une (alcoyl en $C_{1-4}$)amine primaire ou secondaire.

**2.** Procédé selon la revendication 1, où les radicaux $R^1$ représentent des groupes alcoyle avec 1 à 6 atomes de carbone, qui peuvent être substitués par des groupes alcoyloxy en $C_{1-6}$ ou par des groupes hydroxyle.

**3.** Procédé selon la revendication 1 ou 2, où le composant A contient également des silicates.

**4.** Procédé selon l'une quelconque des revendications 1 à 3, où la teneur en hydrogène des produits finaux d'organopolysiloxanes s'élève à 0,0001 - 2% en poids.

**5.** Procédé selon l'une quelconque des revendications 1 à 4, où on utilise comme composant D, qui libère, au contact de l'eau, de l'ammoniaque ou une (alcoyl en $C_{1-4}$)amine primaire ou secondaire, les composés de formule générale (3) à (7)

$$R^2{}_nSiZ_{4-n} \qquad (3)$$

$$(R^2{}_3Si)_2NH \qquad (4)$$

$$(R^2{}_2SiNH)_x \qquad (5)$$

$$(R^2{}_3Si)_2NR^3 \quad (6)$$

et

$$(R^2{}_2SiNR^3)_y \quad (7)$$

où

$R^2$ est un atome d'hydrogène ou un radical alcoyle en $C_1$ à $C_4$;
$R^3$ est un radical alcoyle en $C_1$ à $C_4$;
Z est le groupe $-NHR^3$ ou $NR^3{}_2$;
n a la valeur 2 ou 3;
x est un nombre entier de 3 à 6, et
y est un nombre entier de 1 à 12.

**6.** Procédé selon l'une quelconque des revendications 1 à 5, où, à la suite de la réaction des composants A à D, les organopolysiloxanes contenant de l'hydrogène obtenus sont à nouveau condensés en milieu acide ou basique.

**7.** Procédé selon la revendication 6, où le procédé est réalisé en conditions anhydres, et où des hydroxydes alcalins ou alcalino-terreux dans des solvants organiques sont utilisés comme catalyseurs de condensation.